# EUROPÄISCHE PATENTSCHRIFT

(11) **EP 2 823 873 B1**
(45) Veröffentlichungstag und Bekanntmachung des Hinweises auf die Patenterteilung: **09.08.2017**
(21) Anmeldenummer: 14401073.3
(22) Anmeldetag: 25.06.2014
(51) Int. Cl.: B01D 53/08, B01J 20/34, F23J 15/02, F23K 1/04

(54) **Kleinfeuerungsanlage und Verfahren zu deren Betrieb**
Small heating plant and method for operating the same
Petite installation de chauffage et son procédé de fonctionnement

(30) Priorität: 26.06.2013 DE 102013106677
(43) Veröffentlichungstag der Anmeldung: 14.01.2015
(73) Patentinhaber: Karlsruher Institut für Technologie, 76131 Karlsruhe (DE)
(72) Erfinder: Gehrmann, Hans-Joachim, 76356 Weingarten (DE); Seifert, Helmut, 67069 Ludwigshafen (DE); Seufert, Tobias, 75031 Eppingen (DE)

(56) Entgegenhaltungen:
- EP-A1- 0 808 650
- WO-A1-92/03224
- DE-A1- 3 338 445
- DE-A1- 10 164 066
- DE-A1-102005 005 818

## Beschreibung

Die Erfindung betrifft eine Kleinfeuerungsanlage, einen Brennstoff und ein Verfahren zur Verbrennung von Brennstoffen in einer Kleinfeuerungsanlage mit einer Abgasreinigungseinrichtung.

Kleinfeuerungsanlagen zur Bereitstellung von Heizenergie und/oder der Erwärmung von Brauchwasser, welche mit biogenen und/oder fossilen Brennstoffen wie Pellets, Scheitholz, Biomasse, Öl, Kohle, Koks, Briketts und dergleichen betrieben werden, sind hinreichend bekannt. Beispielsweise wird vereinzelter Brennstoff über eine Zufuhreinrichtung in einen Brennraum eingebracht und dort verbrannt. Die Abgase entweichen über ein Abgasrohr in die Umgebung. Durch eine laufende Verschärfung der Schadstoffgrenzwerte müssen Abgasreinigungseinrichtungen für die Abgase vorgesehen werden. Beispielsweise gelten Grenzwerte für die Ausscheidung von Kohlenmonoxid und Staub. CO kann über die Konstruktion und den Betrieb von Kleinfeuerungsanlagen beeinflusst und minimiert werden, Staub kann in der Regel mittels einer integrierten oder nachgeschalteten Filtereinrichtung, beispielsweise Keramikplatten, Sintermetallplatten und dergleichen gefiltert werden. Bei der Verbrennung von Brennstoffen gebildete Dioxine (Polychlordibenzodioxine) und Furane (Polychlordibenzofurane) sind hochtoxische Schadstoffe und können mittels derartiger Mittel nicht vollständig aus den Abgasen entfernt werden. Abhängig von den in dem Brennraum und dem Abgasrohr der Kleinfeuerungsanlage herrschenden Temperaturen sowie dem Ausbrandverhalten entstehender Flugasche werden Dioxine und Furane gasförmig und/oder partikelgebunden insbesondere in instationären Betriebsweisen der Kleinfeuerungsanlagen, beispielsweise bei deren An- und Abfahren emittiert. Abhängig von der Abgastemperatur, beispielsweise in einem Temperaturbereich von 25°C bis etwa 230°C desorbieren an kohlenstoffhaltigen Aschen gebundene Dioxine und Furane mit unterschiedlichen Desorptionskoeffizienten in die Gasphase. So liegt beispielsweise bei 125°C im Mittel 60 % des Dioxins in der Gasphase vor, 40 % verbleibt im Flugstaub absorbiert. Weiterhin kann eine katalytische Umsetzung während der Kohlenstoffoxidation, beispielsweise bei vorhandenem Kupferchlorid und dergleichen im Feinstaub und in der Flugasche der Verbrennung insbesondere bei in dem Abgasrohr herrschenden Temperaturen von 200°C bis 300°C erfolgen. Innerhalb dieser Randbedingungen ist eine Entfernung von Dioxinen und Furanen allein mittels einer Filtereinheit nicht möglich. In Müllverbrennungsanlagen gehört es zum Stand der Technik, über Herdofenkoksdosierungen, häufig mit Kalk gemischt, gasförmige Dioxine und Furane adsorptiv aus dem Gas zu binden und in Gewebefiltern abzuscheiden. Dies ist für eine Kleinfeuerungsanlage nicht praktikabel.

Die EP 0 693 308 A2 offenbart ein Festbett für eine Abfallverbrennungsanlage aus Polypropylen oder Polyethylen, an dem Dioxine und Furane adsorbiert und mit Hilfe von vorgewärmter Luft desorbiert werden. Die mit Dioxinen beladene Luft wird in den Verbrennungsofen zurückgeführt. Die DE 10 2005 005 818 A offenbart ein Verfahren und eine Feuerungsanlage, wo die Abgase im Gegenstrom zu mit Adsorbens versetzten Pellets geführt werden, die anschließend verbrannt werden.

Aufgabe der Erfindung ist die vorteilhafte Weiterbildung eines Verfahrens, eines Brennstoffs und einer Kleinfeuerungsanlage zur Verbesserung der Abgasqualität, insbesondere zur Reduzierung einer Immission von Dioxinen und Furanen in die Umwelt.

Die Aufgabe wird durch die Merkmale des Verfahrens gemäß Anspruch 1 und die Merkmale der Vorrichtung gemäß Anspruch 5 gelöst. Die von diesen Ansprüchen abhängigen Unteransprüche geben vorteilhafte Ausführungsformen der Merkmalskombination der Ansprüche 1 und 5 wieder.
In den vorgeschlagenen Merkmalskombinationen wird im Einzelnen oder in Summe ein System vorgeschlagen, bei dem fossiler und/oder biogener Brennstoff zum Einsatz kommen kann. Hierbei wird ein Teil des erforderlichen Brennstoffs in beliebiger Form und Art dem Brennraum zugeführt und ein Teil in Form von Adsorbens enthaltenden Pellets. Bevorzugt wird der gesamte Brennstoffbedarf durch biogenen, zu Pellets vereinzelten biogenen Brennstoff gedeckt. Hierbei wird zumindest einem Teil der zu verbrennenden Pellets bei deren Herstellung ein Adsorbens, beispielsweise reaktiver Biokoks aus der Pyrolyse von Biomasse in einem entsprechenden Massenverhältnis beigemischt. Die Eigenschaft von Koksen zur Adsorption von Dioxinen und Furanen ist an sich bekannt. Bevor die Pellets in die Verbrennung gelangen, werden sie vom dioxinbeladenen Abgas aus dem Pelletkessel in einem Wanderbett durchströmt und adsorbieren im Abgas vorhandene Dioxine, Furane und polyzyklische aromatische Kohlenwasserstoffe. Die mit den Schadstoffen beladenen Pellets gelangen in die Feuerung, wo die Dioxine und Furane sowie die polyzyklischen aromatischen Kohlenwasserstoffe bei hohen Verbrennungstemperaturen sicher zerstört werden. Um eine sichere Abscheidung in dem Wanderbett zu gewährleisten, können die Abgase getrocknet werden. Zudem werden sie mittels einer Kühleinrichtung in Form eines Wärmetauschers, beispielsweise zur Erhitzung von Brauchwasser, Gewinnung von Heizenergie oder dergleichen auf eine vorgegebene Temperatur, kleiner gleich 80°C gekühlt Hierdurch wird sichergestellt, dass sich der Großteil der Dioxine und Furane an den Pellets adsorbiert wird und eine Entzündung der Pellets ausgeschlossen wird. Eine derart ausgebildete Kleinfeuerungsanlage kann hierbei mittels gegebenenfalls integrierten Filtereinrichtungen, Abscheidern und dergleichen als Brennwertkessel einschließlich einer entsprechenden Abwassersammlung und eventuell notwendigen Wasseraufbereitung ausgebildet werden. Hierzu kann eine vorherige Abscheidung von Stäuben insbesondere auch im Hinblick auf die Feinstaubproblematik von Biomassefeuerungen zur Einhaltung bestehender Grenzwerte beispielsweise nach der deutschen Bundesimmissionsschutzverordnung (BlmSchV) vorgesehen werden. Beispielsweise kann mittels einer Filtereinrichtung mit Staubabscheidung neben den aus der Feuerung stammenden Flugaschen an diesen anhaftende Schwermetallsalze und partikelgebundene Dioxine/Furane abgeschieden werden. Beispielsweise können Chlorwasserstoff (HCl) beziehungsweise Salzsäure, Schwefeldioxid (SO₂) und deren wässrige Säuren wie Schwefelsäure und dergleichen von einem entsprechend ausgebildeten Abscheider ausgewaschen werden. Gasförmige Dioxine, Furane, polycyclische Kohlenwasserstoffe und dergleichen werden dann durch das in den Pellets enthaltene Adsorbens wie Biokoks abgeschieden und in die Feuerung zum Abbau zurückgeführt. Das bei der Zersetzung freiwerdende Chlor wird in Form von Chlorwasserstoff wieder bei der Kondensation der Abgase ausgewaschen. Stickoxide (NOx) werden in dem vorgeschlagenen Verfahren nicht verringert. Elementares, sich in einem Waschwasser einer entsprechend ausgebildeten Filtereinrichtung anreicherndes Quecksilber (Hg) kann sedimentiert werden, indem in entsprechenden Zeitabständen beispielsweise eine Kalk-Biokoks-Schwefelmischung, ein kokshaltiges Additiv oder eine andere Quecksilber und andere Schwermetalle bindende Komponente in das Waschwasser eingebracht werden.

In einer speziell ausgebildeten Ausführungsform der Kleinfeuerungsanlage werden die mit dem Adsorbens konfektionierten Pellets von einem Beschickungsschacht, der so dimensioniert ist, dass die Abgase nicht hindurchströmen, sondern im Abgasrohr verbleiben, in ein perforiertes Rohr, durch das das beladene Abgas strömt, gefördert. Mittels einer seelenlosen Schnecke werden die Pellets durch das an den Wänden perforierte Rohr in Richtung Brennraum gefördert. Je nach angeforderter Last der Kleinfeuerungsanlage wird der Durchsatz entsprechend angepasst. Steigt der Durchsatz an Pellets, nimmt der Abgasstrom zu und damit die Dioxinfracht, so dass mit zunehmendem Abgasstrom auch eine höhere Dosis an mit dem Adsorbens versehenen Pellets durch das Rohr gefördert werden.

Das vorgeschlagene Verfahren, eine vorgeschlagene Kleinfeuerungsanlage und ein darauf abgestimmter biogener Brennstoff haben in Summe oder für sich in nichtabschließender Aufzählung folgende Vorteile:
- Verbindung einer kontinuierlichen Adsorbensförderung in einer definierten Geometrie (Rohr) mit einem Festbett, bei dem die zu reinigenden Abgase im Kreuzstrom beziehungsweise Gegenstrom mit großen Relativgeschwindigkeiten und damit gutem Stoffübergang zur Schüttung strömen,
- gleichzeitige Durchmischung des Adsorbens zur gleichmäßigen Verteilung und damit besseren Ausnutzung des Adsorbens durch die Schnecke,
- maximaler Kontakt von Abgas und Adsorbens,
- in Verbindung mit einer Filtereinrichtung effektive Abgasreinigung aus alternierender Adsorbenseinbringung, elektrostatischem Abscheider, Kondensationsstufe und Dioxinsenke durch den Brennstoff selbst,
- ausschließlicher Einsatz biogener, das heißt, CO2-neutraler Adsorbentien,
- Nutzung von Synergien zwischen Biomasse und durch Pyrolyse erzeugter sehr reaktiver Biokokse aus diesen Biomassen,
- vollständige Verwertung des Adsorbens, da es gleichzeitig der Brennstoff ist,
- speziell für den Einsatz in häuslichen Kleinfeuerungen konzipiert, die mit minimalem technischen Aufwand gesetzlichen Anforderungen und Grenzwerte erfüllen kann,
- bestehende Kleinfeuerungsanlagen, Kaminöfen, Kachelöfen und dergleichen können mit diesem System nachgerüstet werden,
- Einsatz von alternativen Biomassen zu Holz, die wegen ihrer Tendenz, Schadstoffe zu erzeugen, nicht einsetzbar waren.
Im weitesten Sinne wird ein Verfahren zur Verbrennung von Brennstoffen in einer Kleinfeuerungsanlage mit einer Abgasreinigungseinrichtung vorgeschlagen, bei dem bei der Verbrennung entstehende Abgase mittels einer Kühleinrichtung auf eine vorgegebene Temperatur gekühlt und in einem Gegenstromprinzip an vereinzelten, kontinuierlich und zwangsweise durch ein Abgasrohr geführten und anteilig mit einem verbrennbaren Adsorbens versetzten Pellets bevorzugt aus biogenem Brennstoff in Kontakt gebracht werden und die Pellets nach einer vorgegebenen Verweilzeit in dem Abgasrohr in einen Brennraum der Kleinfeuerungsanlage verbracht und in dem Brennraum verbrannt werden. Biogene Brennstoffe sind aus nachwachsenden Rohstoffen zubereitete und vereinzelte Brennmaterialien wie beispielsweise Pellets, Scheitholz und dergleichen. Fossile Brennstoffe sind in der Erde vorkommende, in der Vergangenheit aus Biomasse gebildete und deponierte verbrennbare Brennstoffe. Unter Kleinfeuerungsanlagen sind beispielsweise Brennkessel für Heizungsanlagen und zur Warmwasserzubereitung, Kachelöfen, Heizöfen wie Schwedenöfen und dergleichen zu verstehen. Die Kleinfeuerungsanlage besitzt einen Brennraum, in den der Brennstoff über zumindest eine Zufuhreinrichtung automatisch, beispielsweise abhängig von einem vorgegebenen Heizbedarf zugeführt oder von Hand nachgelegt wird. Mittels einer Luftzufuhreinrichtung, im einfachsten Fall mittels eines von Hand gesteuerten Kaminzugs oder automatisiert mittels eines Saugluftventilators, Lüfter und dergleichen wird die benötigte Luft zur Verbrennung zugeführt. Der Brennraum kann eine primäre und eine sekundäre Brennkammer aufweisen. Die Kühleinrichtung kühlt beispielsweise 200 °C bis 300 °C heiße Abgase auf die vorgegebene Temperatur, kleiner gleich 80 °C. Die Kühleinrichtung kann beispielsweise ein Wärmetauscher zur Gewinnung von Wärme, beispielsweise warmem Wasser sein und ist zwischen dem brennenden Brennstoff und den mit Adsorbens versetzten Pellets angeordnet.

Zur Vorreinigung der Abgase kann bevorzugt in Richtung der strömenden Abgase betrachtetet vor einem Kontakt mit den Pellets in einer Filtereinrichtung und/oder einem Abscheider gefiltert beziehungsweise gereinigt werden, um beispielsweise Aschepartikel, Feinstaub, Wasserdampf, Schwermetalle wie beispielsweise Quecksilber, Säurebildner wie beispielsweise Chlorwasserstoff, Schwefeldioxid und dergleichen auszufiltern beziehungsweise auszuwaschen. Die Kühleinrichtung kann zwischen den Pellets und der Kühleinrichtung oder vor der Kühleinrichtung vorgesehen sein.

Der Brennstoff wird mittels zumindest einer Zufuhreinrichtung zugeführt. Hierbei kann beispielsweise neben einer automatischen Zuführung von biogenen und/oder fossilen Brennstoffen, beispielsweise Pellets ohne Adsorbens, Scheitholz, Briketts, Koks und dergleichen mittels einer separaten Zufuhreinrichtung oder Zugabe von Brennstoff von Hand eine weitere Zufuhreinrichtung zur Dosierung von mit Adsorbens versetzten Pellets vorgesehen sein. Beispielsweise kann vorgesehen sein, eine erste Feuerungsstufe mittels eines herkömmlichen Brennstoffs und eine zweite Feuerungsstufe mittels der mit Adsorbens versehenen Pellets vorgesehen sein. Hierbei kann die Heizleistung der zweiten Feuerungsstufe soweit herabgesetzt sein, dass diese quasi vernachlässigbar ist. Eine Steuerung dieser Zufuhreinrichtung kann dabei nach Maßgabe zumindest einer Regelgröße, beispielsweise dem Abgasvolumenstrom, der zugeführten Menge des herkömmlichen Brennstoffs und/oder dergleichen erfolgen, die Aufschluss über einen zu erwartenden Dioxingehalt des Abgases geben kann.

Die mit Adsorbens versetzten Pellets werden mittels dieser weiteren Zufuhreinrichtung in einem für die Abgase durchlässigen Wanderbett durch das Abgasrohr geführt und anschließend dem Brennraum zugeführt. Alternativ kann eine einzige Zufuhreinrichtung vorgesehen werden, mittels der eine Zufuhr des gesamten Brennstoffs der Kleinfeuerungsanlage in Form von mit Adsorbens versetzten Pellets über die Zufuhreinrichtung in den Brennraum erfolgt.

Die vorgeschlagene Kleinfeuerungsanlage zur Durchführung des beschriebenen Verfahrens enthält einen Brennraum, zumindest einer Zufuhreinrichtung von Brennstoff in den Brennraum und ein Abgase von dem Brennraum in die Umgebung ableitenden Abgasrohr. Eine der zumindest einen Zufuhreinrichtung für zumindest einen Teil des Brennstoffs in Form von ein Adsorbens für Schadstoffe enthaltenden, vereinzelten Pellets enthält einen für Abgase durchlässigen und in einem Abgasrohr für die Abgase geführten Abschnitt zwischen einem Vorratsbehälter und dem Brennraum und eine bezüglich einer Strömungsrichtung der abzuleitenden Abgase vor dem Abschnitt eine die Abgase auf eine vorgegebene Temperatur abkühlende Kühleinrichtung. In bevorzugter Weise ist vor dem Abschnitt des Abgasrohrs der Zuführeinrichtung die zuvor beschriebene Filtereinrichtung vorgesehen.

Eine durch das Abgasrohr geführte Zufuhreinrichtung enthält einen für die Abgase im Wesentlichen dichten Beschickungsschacht und eine seelenlose, von einem Drehantrieb angetriebene, den Brennstoff von dem Beschickungsschacht in den Brennraum durch den Abschnitt im Abgasrohr transportierende Schnecke. Ein im Wesentlichen für die Abgase dichter Beschickungsschacht kann unter Berücksichtigung der Abgasströmung durch entsprechende Lage am Abgasrohr erzielt werden. Weiterhin können entsprechende Leitbleche und dergleichen zur Umlenkung des Abgases um den Beschickungsschacht vorgesehen sein. Die seelenlose Schnecke kann in dem in dem Abgasrohr geführten Abschnitt in einem für die Abgase durchlässigen Rohr geführt sein und von außen beispielsweise mittels eines Elektromotors angetrieben sein.

Von der Erfindung ist weiterhin ein Brennstoff zur Durchführung des vorgeschlagenen Verfahrens in einer entsprechend ausgebildeten Kleinfeuerungsanlage umfasst, welcher zu Pellets vereinzelt ist und einen vorgegebenen Gehalt an Adsorbens für Schadstoffe enthält. Unter Pellets sind hierbei aus Pulver, Spänen und anderen kleinen Einzelteilen gepresste oder als Stücke einer größeren Einheit vereinzelte Einzelstücke vorgeformte Körper zu verstehen, die als Mischung oder ausschließlich an ihrer Oberfläche einen auf ihr Gewicht bezogenen Anteil an Adsorbens aufweisen. In bevorzugter Weise ist das Adsorbens bezüglich seiner Eigenschaften auf ein vorteilhaftes Adsorptionsverhalten gegenüber Dioxinen, Furanen und polyzyklischen aromatischen Kohlewasserstoffen ausgelegt. In bevorzugter Weise ist das Adsorbens aus Biokoks gebildet. Desweiteren kann zumindest ein Teil des Adsorbens, beispielsweise dessen Oberfläche durch ein Reduktionsverfahren der Pellets gebildet sein, indem diese beispielsweise teilweise und für einen vorgegebenen Zeitraum reduktiven Bedingungen, beispielsweise einer Verbrennung unter verminderter Luftzufuhr ausgesetzt werden. Der Gehalt wie Anteil an Adsorbens kann größer gleich 3 Gewichtsprozent, bevorzugt größer gleich 5 Gewichtsprozent sein. Der Gehalt kann nach oben auf zehn Gewichtsprozent beschränkt sein.

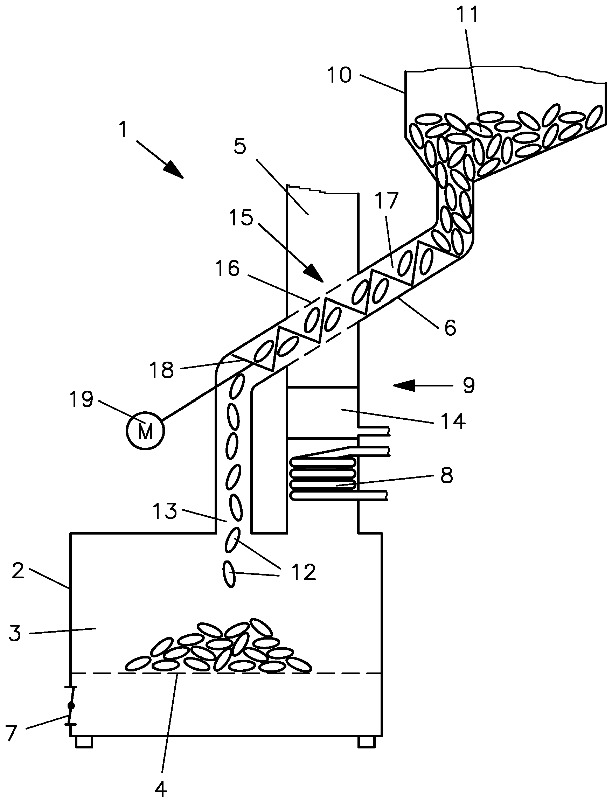

Die Erfindung wird anhand des in der einzigen Figur dargestellten Ausführungsbeispiels näher erläutert. Diese zeigt eine schematisch dargestellte Kleinfeuerungsanlage mit einer Abgasreinigungsanlage zur Eliminierung von Schadstoffen, insbesondere Dioxinen (PCDD), Furanen (PCDF) und polyzyklischen aromatischen Wasserstoffen (PAK, PAH).

Die Kleinfeuerungsanlage 1 enthält den Brennkessel 2 mit dem Brennraum 3, dem Feuerrost 4, dem Abgasrohr 5, der Zufuhreinrichtung 6, Luftzufuhreinrichtung 7, der Kühleinrichtung 8, Abgasreinigungseinrichtung 9 und dem Vorratsbehälter 10 für den Brennstoff 11. Mittels der Zufuhreinrichtung 6 wird der als Pellets 12 vereinzelte Brennstoff 11 von dem Vorratsbehälter 10 über den Beschickungsschacht 13 in den Brennraum 3 auf den Feuerrost 4 dosiert. Durch die Luftzufuhreinrichtung 7, beispielsweise einer Luftklappe, die die Luftzufuhr eines nicht dargestellten Druck- oder Saugluftventilators regelt, wird die entsprechende Luftmenge zugeführt, so dass die angepasst an die angeforderte Brennleistung dosierten Pellets 12 in einer optimalen Stöchiometrie verbrannt werden. Die dabei entstehenden Abgase verlassen den Brennraum 3 über das Abgasrohr 5. Neben weiteren gegebenenfalls vorhandenen Wärmetauschern passieren die heißen Abgase die als Wärmetauscher ausgebildete Kühleinrichtung 8 und der Abscheider 14. Der Abscheider 14 kann je nach Ausführung beispielsweise einen Feinstaubfilter, eine Düse zum Eindüsen von Mitteln zur Sedimentierung von Schadstoffen, beispielsweise Kalk, Koks, Schwefeln, deren Mischungen und dergleichen, einen Kondensator und dergleichen enthalten.

Die Zufuhreinrichtung 6 ist durch das Abgasrohr 5 entlang des Abschnitts 15 geführt und deckt zumindest einen Teil, bevorzugt den gesamten von den Abgasen passierten Querschnitt des Abgasrohrs ab. Hierzu kann das Abgasrohr 5 bezüglich seiner Form dem Abschnitt 15 angepasst sein. Im Bereich des Abschnitts 15 enthält die Zufuhreinrichtung 6 das für die Abgase durchlässige Rohr 16, so dass die Pellets 12 auf ihrem Weg von dem Brennraum in die Umgebung passieren. Die Pellets 12 sind mit einem zumindest die Schadstoffe PCCD, PCCF, PAK adsorbierenden Adsorbens, beispielsweise Biokoks versehen, so dass diese aus den Abgasen entfernt werden. Infolge der vorhergehenden Abkühlung der Abgase auf ca. 80°C mittels der Kühleinrichtung 8 können diese bei zu vernachlässigendem Risiko einer Entzündung der Pellets 12 und mit einem effizienten Adsorptionskoeffizienten aus den Abgasen entfernt werden. Nachfolgend werden die mit den Schadstoffen belasteten Pellets 12 in die Brennkammer 3 befördert, in der die Schadstoffe im Wesentlichen vollständig bei den herrschenden Verbrennungstemperaturen zersetzt werden.

Um einen lückenlosen Transport der Pellets 12 im Abschnitt 15 und damit eine vollständige Adsorption der Schadstoffe aus den Abgasen zu erzielen, werden die Pellets 12 im Gegenstromverfahren in dem Wanderbett 17 zwangsweise transportiert. Hierzu ist die seelenlose Schnecke 18 vorgesehen, welche von dem Drehantrieb 19, beispielsweise einem Elektromotor angetrieben wird.

### Bezugszeichenliste

- 1: Kleinfeuerungsanlage
- 2: Brennkessel
- 3: Brennraum
- 4: Feuerrost
- 5: Abgasrohr
- 6: Zufuhreinrichtung
- 7: Luftzufuhreinrichtung
- 8: Kühleinrichtung
- 9: Abgasreinigungseinrichtung
- 10: Vorratsbehälter
- 11: Brennstoff
- 12: Pellet
- 13: Beschickungsschacht
- 14: Abscheider
- 15: Abschnitt
- 16: Rohr
- 17: Wanderbett
- 18: Schnecke
- 19: Drehantrieb

## Patentansprüche

1. Verfahren zur Verbrennung fossiler und/oder biogener Brennstoffe (11) in einer Kleinfeuerungsanlage (1) mit einer Abgasreinigungseinrichtung (9), in welchem bei der Verbrennung entstehende Abgase mittels einer Kühleinrichtung (8) in Form eines Wärmetauschers auf eine vorgegebene Temperatur kleiner gleich 80°C gekühlt und in einem Gegenstromprinzip mit vereinzelten, kontinuierlich und zwangsweise durch ein Abgasrohr (5) geführten und anteilig mit einem verbrennbaren Adsorbens versetzten Pellets (12) aus Brennstoff in Kontakt gebracht werden und die Pellets (12) nach einer vorgegebenen Verweilzeit in dem Abgasrohr (5) in einen Brennraum (3) der Kleinfeuerungsanlage (1) verbracht und in dem Brennraum (3) verbrannt werden.

2. Verfahren nach Anspruch 1, **dadurch gekennzeichnet, dass** die Abgase vor einem Kontakt mit den Pellets (12) in einem Abscheider (14) vorgereinigt werden.

3. Verfahren nach Anspruch 1 oder 2, **dadurch gekennzeichnet, dass** die Pellets (12) mittels einer Zufuhreinrichtung (6) in einem für die Abgase durchlässigen Wanderbett (17) durch das Abgasrohr (5) geführt und anschließend dem Brennraum (3) zugeführt werden.

4. Verfahren nach einem der Ansprüche 1 bis 3, **dadurch gekennzeichnet, dass** eine Zufuhr des gesamten Brennstoffs der Kleinfeuerungsanlage (1) in Form von Pellets (12) über die Zufuhreinrichtung (6) in den Brennraum (3) erfolgt.

5. Kleinfeuerungsanlage (1) zur Durchführung des Verfahrens nach einem der Ansprüche 1 bis 4 mit einem Brennraum (3), zumindest einer Zufuhreinrichtung (6) von Brennstoff (11) in den Brennraum (3) und einem Abgase von dem Brennraum (3) in die Umgebung ableitenden Abgasrohr (5), **dadurch gekennzeichnet, dass** eine Zufuhreinrichtung (6) für zumindest einen Teil des Brennstoffs (11) in Form von ein Adsorbens für Schadstoffe enthaltenden, vereinzelten Pellets (12) einen für Abgase durchlässigen und in einem Abgasrohr (5) für die Abgase geführten Abschnitt (15) zwischen einem Vorratsbehälter (10) und dem Brennraum (3) aufweist und eine bezüglich einer Strömungsrichtung der abzuleitenden Abgase vor dem Abschnitt (15) eine die Abgase auf eine vorgegebene Temperatur abkühlende Kühleinrichtung (8) in Form eines Wärmetauschers vorgesehen ist.

6. Kleinfeuerungsanlage (1) nach Anspruch 5, **dadurch gekennzeichnet, dass** in Strömungsrichtung vor der Zufuhreinrichtung (6) ein Abscheider (14) zur Reinigung der Abgase vorgesehen ist.

7. Kleinfeuerungsanlage (1) nach Anspruch 5 oder 6, **dadurch gekennzeichnet, dass** die Zufuhreinrichtung (6) einen für die Abgase dichten Beschickungsschacht (13) und eine seelenlose, von einem Drehantrieb (19) angetriebene, den Brennstoff (11) durch den Abschnitt (15) des Abgasohrs (5) in den Brennraum (3) transportierende Schnecke (18) enthält.

8. Kleinfeuerungsanlage (1) nach Anspruch 7, **dadurch gekennzeichnet, dass** die Schnecke (18) in dem in dem Abgasrohr (5) geführten Abschnitt (15) in einem für die Abgase durchlässigen Rohr (16) geführt ist.

## Claims

1. Method for the combustion of fossil and/or biogenic fuels (11) in a small heating plant (1) with a flue gas purification device (9), in which flue gases engendered during the combustion are cooled by means of a cooling device (8) in the form of a heat exchanger to a predetermined temperature of less than or equal to 80 °C, and in a counter-flow principle are brought in contact with pellets (12), which are individualised and conveyed continuously and by forced means through a flue gas pipe (5) and are provided proportionally with a combustible adsorption agent, and serve as fuel, and the pellets (12), after a predetermined dwell time in the flue gas pipe (5) are brought into the combustion chamber (3) of the small heating plant (1) and combusted in the combustion chamber (3).

2. Method according to claim 1, **characterised in that** the flue gases are pre-purified in a separator (14) before contact with the pellets (12).

3. Method according to claim 1 or 2, **characterised in that** the pellets (12) are conveyed through the flue gas pipe (5) by means of a delivery device (6) in a movable bed (17) permeable for the flue gases, and are then conveyed to the combustion chamber (3).

4. Method according to any one of claims 1 to 3, **characterised in that** a delivery of the entire fuel of the small heating plant (1) takes place in the form of pellets (12) by way of the delivery device (6) into the combustion chamber (3).

5. Small heating plant (1) for carrying out the method according to any one of claims 1 to 4, with a combustion chamber (3), at least one delivery device (6) for fuel (11) into the combustion chamber (3), and a flue gas pipe (5) conveying flue gases from the combustion chamber (3) to the outside, **characterised in that** a delivery device (6) for at least a part of the fuel (11), in the form of individualised pellets (12) containing an adsorbent agent for pollutant substances, comprises a section (15) which is permeable for flue gases and is guided in a flue gas pipe (5) for the flue gases, arranged between a storage container (10) and the combustion chamber (3), and a cooling device (8) in the form of a heat exchanger for cooling the flue gases to a predetermined temperature, upstream of the section (15) in relation to a flow direction of the flue gases which are to be conveyed away.

6. Small heating plant (1) according to claim 5 **characterised in that** a separator (14) for purifying the flue gases is provided upstream of the delivery device (6) in relation to the flow direction.

7. Small heating plant (1) according to claim 5 or 6, **characterised in that** the delivery device (6) contains a loading shaft (13), tight against the flue gases, and a coreless worm conveyor (18), driven by a rotary drive (19), which transports the fuel (11) through the section (15) of the flue gas pipe (5) into the combustion chamber (3).

8. Small heating plant (1) according to claim 7, **characterised in that** the worm conveyor (18) is guided in the section (15), which is guided in the flue gas pipe (5), in a pipe (16) which is permeable for the flue gases.

## Revendications

1. Procédé de combustion de combustibles fossiles et/ou biogéniques (11) dans une petite installation de chauffage (1) équipée d'une installation de nettoyage des gaz de combustion (9),
selon lequel
on refroidit les gaz de combustion à l'aide d'une installation de refroidissement (8) sous la forme d'un échangeur de chaleur pour arriver à une température prédéfinie inférieure ou égale à 80°C pour leur mise en contact par passage à contrecourant dans des granulés (12) de matières combustibles, mélangées à un adsorbant combustible, ces granulés, dispersés, traversant en continu et de force, une conduite de gaz de combustion (5), et après un temps de séjour prédéfini dans le conduit de gaz de combustion (5), ces granulés (12) alimentent la petite installation de chauffage (1) pour être brûlés dans sa chambre de combustion (3).

2. Procédé selon la revendication 1,
**caractérisé en ce que**
les gaz de combustion sont nettoyés au préalable dans un séparateur (14), avant leur mise en contact avec les granulés (12).

3. Procédé selon la revendication 1 ou 2,
**caractérisé en ce qu'**
on alimente les granulés (12) par une installation d'alimentation (6) dans un lit mobile (17) perméable aux gaz de combustion, en les faisant passer par le conduit de gaz de combustion (5) pour alimenter ensuite la chambre de combustion (3).

4. Procédé selon l'une des revendications 1 à 3,
**caractérisé en ce qu'**
on alimente l'ensemble du combustible de la petite installation de chauffage (1) sous la forme de granulés (12) par l'installation d'alimentation (6) dans la chambre de combustion (3).

5. Petite installation de chauffage (1) pour la mise en oeuvre du procédé selon l'une des revendications 1 à 4 comportant une chambre de combustion (3), au moins une installation d'alimentation (6) du combustible (11) de la chambre de combustion (3) et une conduite de gaz de combustion (5) évacuant les gaz de combustion de la chambre de combustion (3) vers l'environnement,
installation **caractérisée en ce que**
l'installation d'alimentation (6) pour au moins une partie du combustible (11) sous la forme de granulés (12), dispersés, contenant un adsorbant de polluants, comporte entre le réservoir (10) et la chambre de combustion (3) un segment (15) perméable aux gaz de combustion et traversant le conduit des gaz de combustion (5), et une installation de refroidissement (8) sous la forme d'un échangeur de chaleur pour refroidir les gaz de combustion à une température prédéfinie, cette installation étant en amont du segment (15) selon le sens de passage des gaz de combustion à évacuer.

6. Petite installation de chauffage (1) selon la revendication 5,
**caractérisée par**
un séparateur (14) en amont de l'installation d'alimentation (6) selon le sens de passage, pour nettoyer les gaz de combustion.

7. Petite installation de chauffage (1) selon la revendication 5 ou 6,
**caractérisée en ce que**
l'installation d'alimentation (6) comporte une cheminée d'alimentation (13) étanche aux gaz de combustion et une vis (18) sans âme, entraînée par un moyen d'entraînement en rotation (19) et transportant le combustible (11) dans le segment (15) traversant le conduit des gaz de combustion (5) dans la chambre de combustion (3).

8. Petite installation de chauffage 1 selon la revendication 7,
**caractérisée en ce que**
la vis (18) est guidée dans le segment (15) passant dans le conduit (5) des gaz de combustion, par un tuyau (16) perméable aux gaz de combustion.
